# EUROPEAN PATENT SPECIFICATION

(11) **EP 3 725 133 B1**
(45) Date of publication and mention of the grant of the patent: **24.04.2024**
(21) Application number: 19738418.3
(22) Date of filing: 13.01.2019
(51) Int. Cl.: H04W 88/08

(54) **METHOD AND APPARATUS FOR FRONT-HAUL NETWORK DEPENDENT WIRELESS NETWORK CONTROL**
VERFAHREN UND VORRICHTUNG FÜR FRONT-HAUL-NETZWERKABHÄNGIGE DRAHTLOSE NETZWERKSTEUERUNG
PROCÉDÉ ET APPAREIL DE COMMANDE DE RÉSEAU SANS FIL DÉPENDANT D'UN RÉSEAU DE LIAISONS INTERMÉDIAIRES

(30) Priority: 15.01.2018 US 201815871379
(43) Date of publication of application: 21.10.2020
(73) Proprietor: HUAWEI TECHNOLOGIES CO., LTD., Shenzhen, Guangdong 518129 (CN)
(72) Inventor: HALABIAN, Hassan, Kanata, Ontario K2W 0A5 (CA); AKHAVAIN MOHAMMADI, Mehdi, Arashmid, Ottawa, Ontario K2H 8B3 (CA); ASHWOOD-SMITH, Peter, Gatineau, Québec J9A 2V8 (CA)
(74) Representative: Maiwald GmbH
(86) International application number: PCT/CN2019/071511
(87) International publication number: WO 2019/137513

(56) References cited:
- WO-A1-2015/044871
- CN-A- 106 576 393
- US-A1- 2012 281 556
- US-A1- 2015 223 160
- TASHIRO TAKAYOSHI ET AL: "A novel DBA scheme for TDM-PON based mobile fronthaul", OFC 2014, OSA, 9 March 2014 (2014-03-09), pages 1-3, XP032632804, DOI: 10.1109/OFC.2014.6886953 [retrieved on 2014-08-27]
- PAWAR SAMEER ET AL: "Front-Haul Compression Using Scheduling Side Information for Cloud Radio Access Networks", 2015 IEEE GLOBAL COMMUNICATIONS CONFERENCE (GLOBECOM), IEEE, 6 December 2015 (2015-12-06), pages 1-6, XP032872674, DOI: 10.1109/GLOCOM.2014.7417540 [retrieved on 2016-02-23]
- KT Corp: "Discussion on Different NR RAN Splitting Options", 3GPP TSG-RAN WG2 #93bis R2-162604, 15 April 2016 (2016-04-15), XP051082176,

## Description

### CROSS REFERENCE TO RELATED APPLICATIONS

This application claims the benefit of priority to US Patent Application Serial No. 15/871,379 filed January 15, 2018, and entitled "Method and Apparatus for Front-Haul Network Dependent Wireless Network Control".

### FIELD OF THE INVENTION

The present invention pertains to the field of communications networks in general, and in particular to wireless network management and control within Radio Access Network (RAN) architecture

### BACKGROUND

In wireless communication networks, a concept of cloud-RAN (C-RAN) architecture has been recently introduced in order to meet higher wireless network coverage and capacity demand. The C-RAN architecture decomposes base terminal station (BTS) into front-haul and back-haul components and provides cloud solutions for each component using the notions of software defined networking (SDN) and network function virtualization (NFV). The C-RAN architecture permits low-complexity implementation of wireless transmitter / receiver or remote radio head (RRH), which can be advantageous.

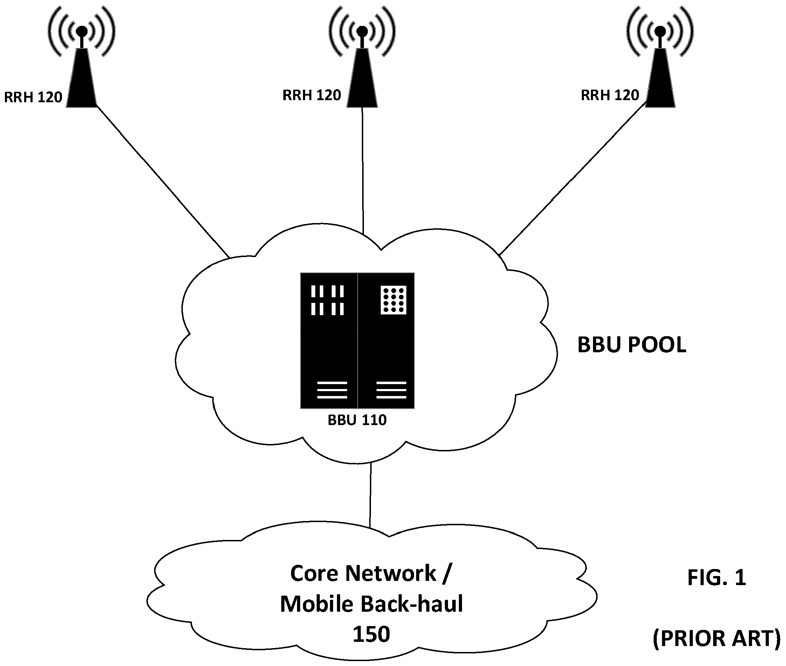

As shown in FIG. 1, a portion of the functionality for one or more BTSs is placed at a more centrally located network component or baseband unit (BBU) 110. The centralization of some BTS functions in a BBU 110 or BBU pool allows economies of scale in some of the BTS processing and lowers transmission losses by the communication of baseband signals, between the BBU 110 and a remote radio head (RRH) along a front-haul link therebetween. The RRH 120 converts the baseband signals to RF time-domain signals for transmission to a user equipment (UE). The BBU 110 or BBU pool may be coupled to a mobile back-haul network 150 by one or more cables or fibers.

One or more of BTS functionalities can be split between the BBU 110 and the RRH 120 in a number of fashions and in some instances, the RRH 120 can only be assigned a few functions. In some cases, the RRH 120 functions may include power amplification and RF mixing of signals between baseband and RF. In some cases, the BBU 110 may digitize signals so that the front-haul links convey digital signals. In such cases, the RRH 120 functions may also include digital-to-analog conversion (DAC) functions on the transmit side and analog-to-digital conversion (ADC) functions on the receive side.

Moreover, the front-haul capacity can scale substantially linearly with a number of factors, including without limitation, the number of antenna ports, the number of sectors, the sampling rate, the number of carriers, the front-haul overhead and the front-haul compression factor.

However, a front-haul network is not capable of managing network resources based on a real time traffic requirement, for example traffic at a given moment, which can result in an undesirable instability of the front-haul network.

Accordingly, there is a need for a method and a system for network resource management that, when configuring network functions, takes into account the front-haul network status in order to attempt to maintain stability of the front-haul network.

This background information is intended to provide information that may be of possible relevance to the present invention. No admission is necessarily intended, nor should be construed, that any of the preceding information constitutes prior art against the present invention.
Document US 2012 281 556 A1 relates to multi-point fast coordinated transmission in an Orthogonal Frequency Division Multiplexing (OFDM) communication system.
Paper "Tashiro Takayoshi; et al.: A novel DBA scheme for TDM-PON based Mobile Fronthaul. OFC 2014" relates to dynamic bandwidth allocation (DBA), particularly for upstream transmission in TDM-PON (Passive Optical Network).
Paper "Pawar Sameer; et al.: Front-haul compression using scheduling side information for Cloud Radio Access Networks. 2015 IEEE Global Communications Conference (GLOBECOM), 6 December 2015"
Document US 2015 223 160 A1 relates to a wireless local area network (WLAN).

### SUMMARY

An object of the present invention to provide a method for managing resources in a cloud RAN per claim 1 and corresponding scheduler apparatus claim 5. Dependent claims provide preferred embodiments of the invention.

Embodiments have been described above in conjunctions with aspects of the present invention upon which they can be implemented. Those skilled in the art will appreciate that embodiments may be implemented in conjunction with the aspect with which they are described, but may also be implemented with other embodiments of that aspect. When embodiments are mutually exclusive, or are otherwise incompatible with each other, it will be apparent to those skilled in the art. Some embodiments may be described in relation to one aspect, but may also be applicable to other aspects, as will be apparent to those of skill in the art.

### BRIEF DESCRIPTION OF THE FIGURES

Further features and advantages of the present invention will become apparent from the following detailed description, taken in combination with the appended drawing, in which:
FIG. 1 is a block diagram illustrating an example of a C-RAN architecture with at least one Baseband Unit (BBU) and point-to-point front-haul links to at least one Remote Radiohead (RRH) according to the prior art.
FIG. 2 is a block diagram illustrating an example of a front-haul network coupling one or more Baseband Units (BBU) to one or more Remote Radio Heads (RRH) through one or more of intermediary network nodes and point-to-point front-haul links according to embodiments of the present invention.
FIG. 3 is a block diagram illustrating the flow of the front-haul network information between the scheduler and each of the network entities, according to embodiments, of the present invention.
FIG. 4 is a block diagram illustrating the flow of the front-haul network information between the admission controller and each of the network entities, according to embodiments of the present invention.
FIG. 5 is a flow diagram illustrating a method for managing front-haul network resources by scheduling network transmissions in accordance with embodiments of the present invention.
FIG. 6 is a flow diagram illustrating a method for managing front-haul network resources by manipulating the UE admission control parameters in accordance with embodiments of the present invention.
FIG. 7 is a schematic diagram of an electronic device, accordance with embodiments of the present invention.

For the purpose of explanation and not limitation, specific details are set forth in order to provide a thorough understanding. It will be also noted that throughout the appended drawings, like features are identified by like reference numerals.

### DETAILED DESCRIPTION

It has been found that a traffic dependent front-haul network can provide adequate front-haul bandwidth resources that corresponds to user equipment (UE) load at various RRHs which varies over time through predictive control actions or front-haul network resource planning. The change in load imposed on a given front-haul network entity may be predictable in that it is responsive to a temporal event. By way of non-limiting example, if a RRH is located in a commercial area of downtown, one could reasonably predict that the capacity required by a front-haul network link connected to the RRH may increase around 9:00 am and stay relatively high until about 5:00 pm every Monday through Friday. Thus, the traffic dependent front-haul network may proactively increase the capacity of such front-haul network link between 9:00 am and 5:00 pm Monday through Friday. The front haut network may also decrease the capacity of the front-haul network link between 5:00 pm Friday and 9:00 am following Monday.

However, this predictive control action of the front-haul network does not provide an at least partial real time mechanism for management of front-haul wireless network resources. In other words, management of traffic dependent front-haul network resources is not enabled based on real time traffic requirements, for example traffic at a given moment. This may result in instability of the front-haul network in case of erroneous prediction regarding the front-haul network resource requirements. If the prediction is inaccurate due to for example unexpected temporal events, a network entity that is responsible for front-haul network resource planning may not be able to perform front-haul network resource management accurately so that the front-haul network link may become unstable.

The present invention provides methods and apparatuses for managing front-haul network resources based on one or more front-haul network characteristics. The methods and apparatuses disclosed and described herein, can be used to enable management of network resources such that stability of the front-haul network may be achieved or maintained. The front-haul network characteristics can provide statuses or conditions or combinations thereof, regarding various network entities that can include the front-haul network as well as features and parameters regarding the front-haul network entities. According to embodiments of the present invention, one or more front-haul network characteristics are collected (or otherwise determined) by one or more front-haul network entities (e.g. a front-haul network controller) and are delivered to one or more network entities that manage network resources (e.g. scheduler, admission controller). The network entities, based on the received one or more front-haul network characteristics, manage network resources in their control, for example front-haul network resources. For example, management of the front-haul network resources can include scheduling use of the front-haul network resources by UEs, managing admission of UEs onto the communication network or other form of network resource management. By taking into account one or more front-haul network characteristics, the management of the network resources can be adapted to varying front-haul network requirements, e.g. real time management. As such, network resources can be managed in order to provide a level of optimization of the use of these resources and a level of stability of operation of the front-haul network.

The invention will now be described with reference to specific examples. It will be understood that the following examples are intended to describe embodiments of the invention and are not intended to limit the invention in any way.

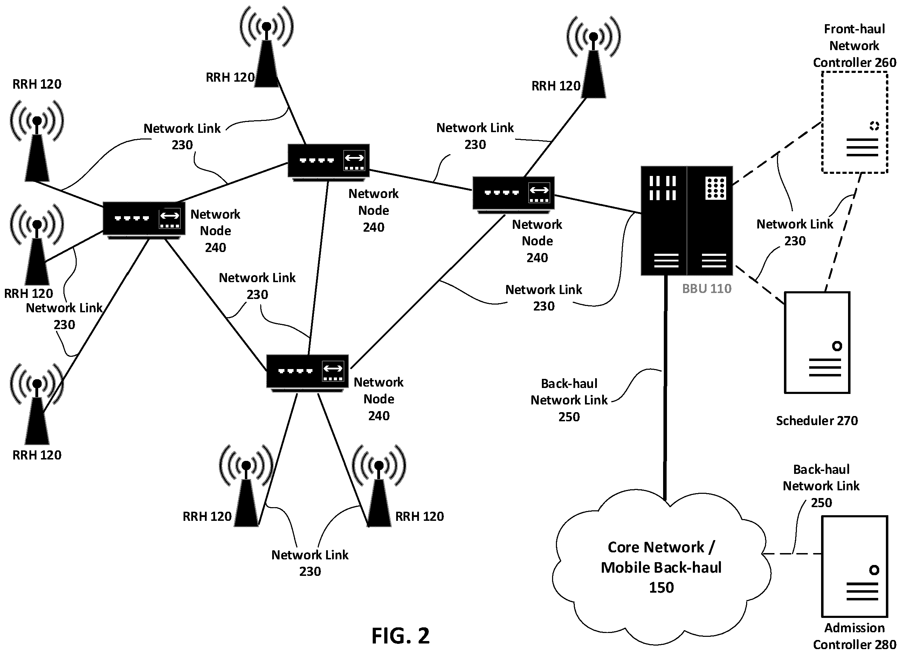

FIG. 2 is a block diagram illustrating an example of a front-haul network coupling one or more Baseband Units (BBU) to one or more Remote Radio Heads (RRH) through one or more of intermediary network nodes and point-to-point front-haul links according to embodiments of the present invention. This configuration of the front-haul network may be suitable to support and take advantage of statistical multiplexing gains. The BBU 110 is coupled to the RRHs 120 by a plurality of front-haul network links 230. Between the BBU and the RRH 120, there may be one or more network nodes 240. Each of the network nodes 240 may be coupled to one or more of the other network nodes 240, the BBU 110 and the RRHs 120 by one or more of the front-haul network links 230. The BBU 110 may be coupled to the core network / Mobile Back-haul 150 by one or more back-haul network links 250. In some embodiments, a front-haul network controller 260 is coupled to the BBU by one or more of the front-haul network links 230. In other embodiments, the front-haul network controller 260 is configured such that the functionality of the front-haul network controller is integrated into the functions performed by the BBU. The front-haul network controller 260 can collect information about the front-haul network such as, by way of non-limiting example, capacity of each front-haul network link, capacity of each front-haul network node, current status of front-haul network resources, current bit-rate usage of each front-haul network links and statistical multiplexing data.

The scheduler 270, for example a radio resource scheduler, is coupled to the BBU by one or more of the front-haul network links 230. In some embodiments, the functionality of the scheduler 270 is integrated into the functions performed by the BBU. In other embodiments, the scheduler 270 may be directly or indirectly coupled to the front-haul network controller 260 by one or more of the front-haul network links 230. According to embodiments, the front-haul network controller 260 may provide the scheduler 270 with one or more of the front-haul network characteristics, which may be directly collected or derived by the front-haul network controller from the information mentioned above. In some embodiments, the front-haul network controller 260 may not be present in the front-haul network thus the scheduler 270 may receive information indicative of the front-haul network, directly or indirectly, from one or more of the front-haul network entities (e.g. the BBU 110, the RRHs 120, the network links 230, the network nodes 240).

The admission controller 280, for example a traffic admission controller, is coupled to the core network by one or more the back-haul network links 250. In some embodiments, the admission controller 280 may be directly or indirectly coupled to the front-haul network controller 260 by one or more of the front-haul network links 230 and back-haul network links 250. In other embodiments, the functionality of the admission controller 280 is integrated into the functions performed by the core network. According to embodiments, the front-haul network controller 260 may provide the admission controller 280 with one or more of the front-haul network characteristics mentioned above. In other embodiments, the front-haul network controller 260 may not be present in the front-haul network thus the admission controller 280 may receive information indicative of the front-haul network, directly or indirectly, from one or more of the front-haul network entities, (e.g. the RRHs 120, the network links 230, the network nodes 240).

Each of the front-haul network links 230 may be configured such that their bit-rate capacity can be varied. In some embodiments, a variable bit-rate capability of the front-haul network links 230 can be provided by at least one of a flexible Ethernet (FlexE), synchronous optical networking (SONET), Dense Wavelength Division Multiplexing (DWDM) link, Link Aggregation (LAG) and Equal Cost Multi Path (ECMP) link. Either or both of LAG and ECMP links can allow for increases in network capacity between two network nodes by using parallel links and spreading network traffic therebetween.

Each of the RRHs 120 supports are configured to support one or more UEs. However as would be readily understood in some instances a RRH may not have any UE with which it is in communication. In some instances, a UE may be supported by multiple RRHs 120, such as by way of non-limiting example during hand-off or in a MIMO (multiple inputs, multiple outputs) antenna deployment.

The front-haul network nodes 240 exchange packets of data through the front-haul network links 230. In some embodiments, the packets contain frequency-domain samples of front-haul information for communication between the RRH 120 and a UE supported thereby. In some embodiments, the front-haul information comprises frequency-domain I/Q samples which may relate to sub-carrier(s) used by the RRH 120 in communication with the supported UE(s). In some embodiments, the packets omit at least one sample associated with at least one subcarrier that is not used by the RRH 120 in communication with the supported UE(s). As such the scheduler is configured to enable the scheduling of radio resources, for example enabling connection of a UE to the RRH. In some embodiments, the packets exchanged by the front-haul network nodes 240 are variable-length packets.

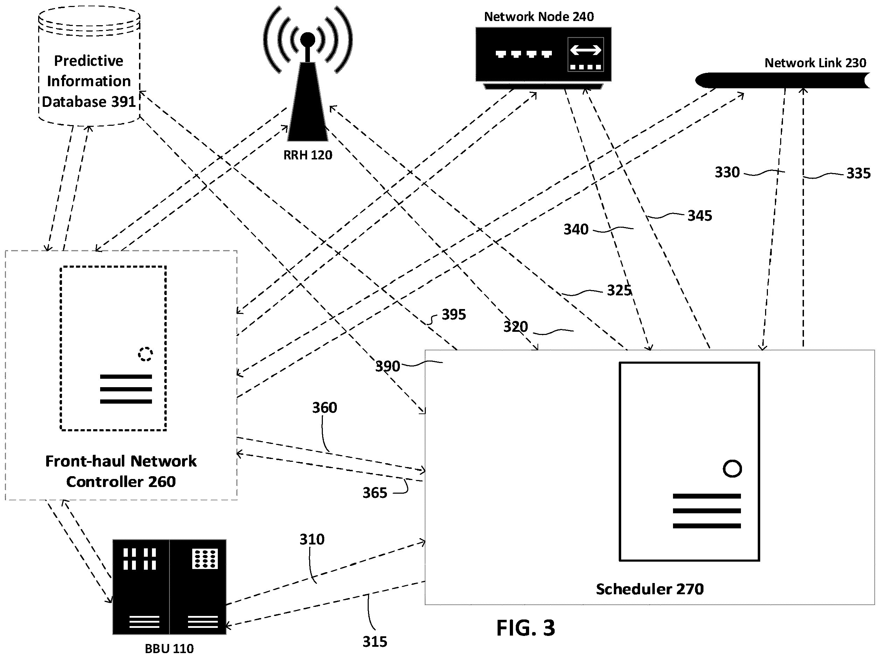

**FIG. 3** is a block diagram that describes the flow of the front-haul network information between the scheduler 270 and each of the network entities including the front-haul network controller 260, the BBU 110, the RRHs 120, the front-haul network links 230, the front-haul network nodes 240 and a database of predictive information 391 according to embodiments of the present invention.

According to embodiments, the scheduler 270 receives inputs 360, for example one or more front-haul network characteristics, from the front-haul network controller 260. In some instances, the front-haul network controller 260 may collect information from one or more of the BBU 110, the RRHs 120, the front-haul network links 230 and the front-haul network nodes 240 and send the information, for example one or more front-haul network characteristics, to the scheduler 270. In some instances, the front-haul network controller collects and receives information from one or more of the BBU 110, the RRHs 120, the front-haul network links 230 and the front-haul network nodes 240 and subsequently determines or evaluates one or more front-haul network characteristics which are subsequently forwarded to the network scheduler 270.

In embodiments where the scheduler receives the one or more front haul characteristics from the front-haul network controller, the scheduler may solely need to enable a communication link with the front-haul network controller 260 for the purpose of receiving the one more front-haul network characteristics. In some embodiments, the scheduler 270 sends outputs 365 to the front-haul network controller 260. Such outputs may include acknowledgements of the receipt of information from the front-haul network controller 260.

It is understood that some or all of the information that may be collected by the front-haul network controller 260 from one or more of the BBU 110, the RRHs 120, the front-haul network links 230 and the front-haul network nodes 240 may, in some embodiments, be transmitted to the scheduler 270 directly therefrom. In instances where the scheduler collects information from at least some of the information from the network entities other than the front-haul network controller, the scheduler 270 can further enable a communication link with those particular network entities. Furthermore, when the scheduler receives information from network entities other than the front-haul network controller, the scheduler may be further configured to evaluate or determine one or more front-haul network characteristics from this collected information. As such, the scheduler may be configured to perform at some of the functionality of the front-haul network controller.

According to embodiments, the scheduler 270 may receive inputs 310 from the BBU 110. The inputs 310 may include information regarding the network transmission itinerary (e.g. front-haul network path selection) from the BBU 110 to the destination RRH 120 which may enable transmission of data packets to the UE. For example, the inputs can include information which can be used by the RRH evaluate radio waveforms which enable communication with the UE. In some embodiments, such information may include the capacity requirement for the front-haul network links 230. In some embodiments, the information may include the current status of the front-haul network links 230 which comprise the itinerary. In some embodiments, the scheduler 270 sends outputs 315 to the BBU 110. Such outputs may include acknowledgements of the receipt of information from the BBU 110. Depending on the configuration of the network, it will be readily understood that the information defined above as being communicated to the scheduler, can be transmitted to the front-haul network controller.

According to embodiments, the scheduler 270 may receive inputs 320 from each RRH 120. Such inputs 320 may include information about whether the RRH has successfully adapted to the changes to the capacity of the underlying front-haul network links 230. The input 320 may also include information about the capacity of the underlying RRHs 120. Depending on the configuration of the network, it will be readily understood that the information defined above as being communicated to the scheduler, can be transmitted to the front-haul network controller. In some embodiments, the scheduler 270 sends outputs 325 to the RRH 120. Such control outputs may include information about network resource scheduling so that the RRH 120 can determine which subset(s) of resource blocks to allocate or not to allocate thereto in order to restrict transmissions when, for example, the associated front-haul network links are congested. The resource block allocation may be regulated in one or more of time and frequency domains. The outputs 325 may also include information to alert the receiving front-haul network node 240 that the front-haul network may be congested at one or more of the front-haul network links 230 and front-haul network nodes 240. In such a case, the front-haul network links and the network nodes can include the network path selected for the network transmission to the destination RRH 120.

According to embodiments, the scheduler 270 may receive inputs 330 from each front-haul network links 230 and may send outputs 335 to the front-haul network links 230. The inputs 330 may include information about the current bit-rate of the front-haul network link 230 measured at a specific location (i.e. a specific network segment). Specific geographical information for each front-haul network links 230, where the current-bit rate of the network traffic is measured, may be also included in the inputs 330. Depending on the configuration of the network, it will be readily understood that the information defined above as being communicated to the scheduler, can be transmitted to the front-haul network controller. The outputs 335 may include instructions with regards to changes (at least one of increase and decrease) to the current load capacity, in terms of a bit-rate, allocated to the network link 230.

According to embodiments, the scheduler 270 may receive inputs 340 from each front-haul network node 240. The inputs 340 may include information about front-haul network traffic constraints imposed on the network nodes 240. In some embodiments, the inputs 340 include at least one of the size and number of data packets sent through a specific front-haul network link 230 from a specific front-haul network node 240 to the destination RRH 120 or another front-haul network node 240 (i.e. intermediary node). Depending on the configuration of the network, it will be readily understood that the information defined above as being communicated to the scheduler, can be transmitted to the front-haul network controller. According to embodiments, the scheduler 270 may send outputs 345 to one or more front-haul network nodes 240. The outputs 345 may include information to alert the receiving front-haul network node 240 that front-haul network may be congested at one or more of the front-haul network links 230 and the front-haul network nodes 240 where such front-haul network links and network nodes comprise the network path selected for the network transmission to the destination RRH 120.

According to embodiments, the scheduler 270 may receive control inputs 390 from a database of predictive information 391. In some embodiments, the predictive information may be a list of UEs for which a massive network transmission (e.g. uplink or downlink transmission) can be anticipated based on historical use by this particular UE, when the UE is admitted to the network. In some embodiments, the predictive information can include predicted characteristics of the network, for example one or more of predicted traffic intensity, predicted UE intensity, predicted UE distributions and other predicted characteristics of the network as would be readily understood. In some embodiments, the scheduler 270 sends outputs 395 to the database of predictive information 391. Such outputs may include one or a combination of acknowledgements of the receipt of information from the database of predictive information 391 and updates to UE use parameters for further refinement of the predictive information in the database.

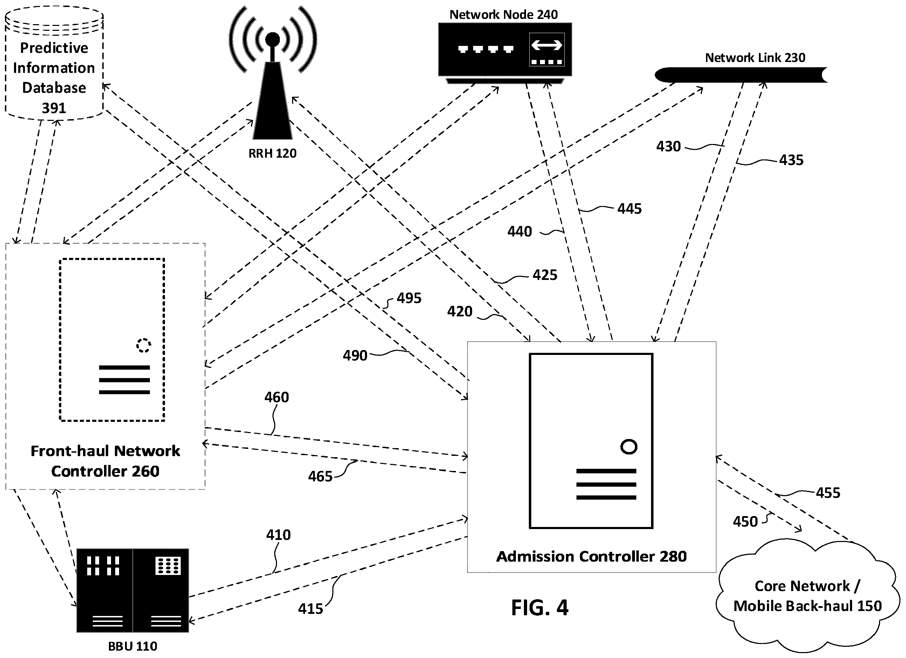

FIG. 4 is a block diagram that describes the flow of the front-haul network information between the admission controller 280 and a variety of network components including front-haul network controller 260, the BBU 110, the RRHs 120, the front-haul network links 230, the front-haul network nodes 240, the database of predictive information 391 and the Core Network / Mobile Back-haul 150.

According to embodiments, the admission controller 280 receive inputs 460, for example one or ore front-haul network characteristics, from the front-haul network controller 260. In some instances, the front-haul network controller 260 may collect information from one or more of the BBU 110, the RRHs 120, the front-haul network links 230 and the front-haul network nodes 240 and send the information to the admission controller 280. In some instances, the front-haul network controller collects and receives information from on or more of the BBU 110, the RRHs 120, the front-haul network links 230 and the front-haul network nodes 240 and subsequently determines or evaluates one or more front-haul network characteristics which are subsequently forwarded to the admission controller 280. In some embodiments, the inputs 460 include recommendation on per slice traffic volume in the front-haul network provided by the front-haul network controller 260.

In embodiments where the admission controller receives the one or more front haul characteristics from the front-haul network controller, the admission controller may solely need to enable a communication link with the front-haul network controller 260 for the purpose of receiving the one or more front-haul network characteristics. In some embodiments, the admission controller 280 sends outputs 465 to the front-haul network controller 260. Such outputs may include acknowledgements of the receipt of information from the front-haul network controller 260.

It is understood that some or all of the information that may be collected by the front-haul network controller 260 from one or more of the BBU 110, the RRHs 120, the front-haul network links 230 and the front-haul network nodes 240 may, in some embodiments, be transmitted to the admission controller 280 directly therefrom. In instances where the admission controller collects information from at least some of the information from the network entities other than the front-haul network controller, the admission controller 280 can further enable a communication link with those particular network entities. Furthermore, when the admission controller receives information from network entities other than the front-haul network controller, the admission controller may be further configured to evaluate or determine one or more front-haul network characteristics from this collected information. As such, the admission controller may be configured to perform at some of the functionality of the front-haul network controller.

According to embodiments, the admission controller 280 may receive inputs 410 from the BBU 110. The inputs 410 may include information regarding the network transmission itinerary (ex. front-haul network path selection) from the BBU 110 to the destination RRH 120. In some embodiments, such information may include the capacity requirement for the front-haul network links 230. In some embodiments, the information may include the current status of selected front-haul network path. In some embodiments, the admission controller 280 sends outputs 415 to the BBU 110. Such outputs may include acknowledgements of the receipt of information from the core network.

According to embodiments, the admission controller 280 may receive inputs 420 from each RRH 120. Such inputs 420 may include information about whether the RRH has successfully adapted to the changes to the capacity of the underlying front-haul network links 230. The input 420 may also include information about the capacity of the underlying RRHs 120. In some embodiments, the admission controller 280 sends outputs 425 to the RRH 120. Such outputs may include information about admissions and rejections so that the RRH 120 is informed regarding whether a new network connection should be allowed.

According to embodiments, the admission controller 280 may receive inputs 430 from each front-haul network links 230 and may send outputs 435 to the front-haul network links 230. The inputs 430 may include information about the current bit-rate of the front-haul network links 230 measured at a specific location (i.e. a specific network segment). Specific geographical information for each front-haul network links 230, where the current-bit rate of the network traffic is measured, may be also included in the inputs 430. The outputs 435 may include instructions with regards to changes (at least one of increase and decrease) to the current load capacity, in terms of a bit-rate, allocated to the network link 230.

According to embodiments, the admission controller 280 may receive inputs 440 from each front-haul network node 240. The inputs 440 may include information about front-haul network traffic constraints imposed on the network nodes 240. In some embodiments, the inputs 440 include at least one of the size and number of data packets sent through a specific front-haul network link 230 from a specific front-haul network node 240 to the destination RRH 120 or another front-haul network node 240 (i.e. intermediary node). According to embodiments, the admission controller 280 may send outputs 445 to one or more front-haul network nodes 240. The outputs 445 may include information to alert the receiving front-haul network node 240 that the front-haul network may be congested at one or more of the front-haul network links 230 and the front-haul network nodes 240. Such front-haul network links and network nodes can define the network path selected for the network transmission to the destination RRH 120.

According to embodiments, the admission controller 280 may receive inputs 450 from the Core Network / Mobile back-haul 150. The input 450 may include information regarding the admission control at the destination RRH 120. In some embodiments, the information may include the default threshold values established by admission control mechanism to regulate UE admissions. In some embodiments, the admission controller 280 sends outputs 455 to the Core Network / Mobile back-haul 150. Such outputs may include acknowledgements of the receipt of information from the Core Network / Mobile back-haul 150.

According to embodiments, the admission controller 280 may receive inputs 490 from a database of predictive information 391. In some embodiments, the predictive information may be a list of UEs for which a massive network transmission (e.g. uplink or downlink transmission) can be anticipated based on historical use by this particular UE, when the UE is admitted to the network. In some embodiments, the predictive information can include predicted characteristics of the network, for example one or more of predicted traffic intensity, predicted UE intensity, predicted UE distributions and other predicted characteristics of the network as would be readily understood. In some embodiments, the admission controller 280 sends outputs 495 to the database of predictive information 391. Such outputs may include one or a combination of acknowledgements of the receipt of information from the database of predictive information 391 and updates to UE use parameters for further refinement of the predictive information in the database.

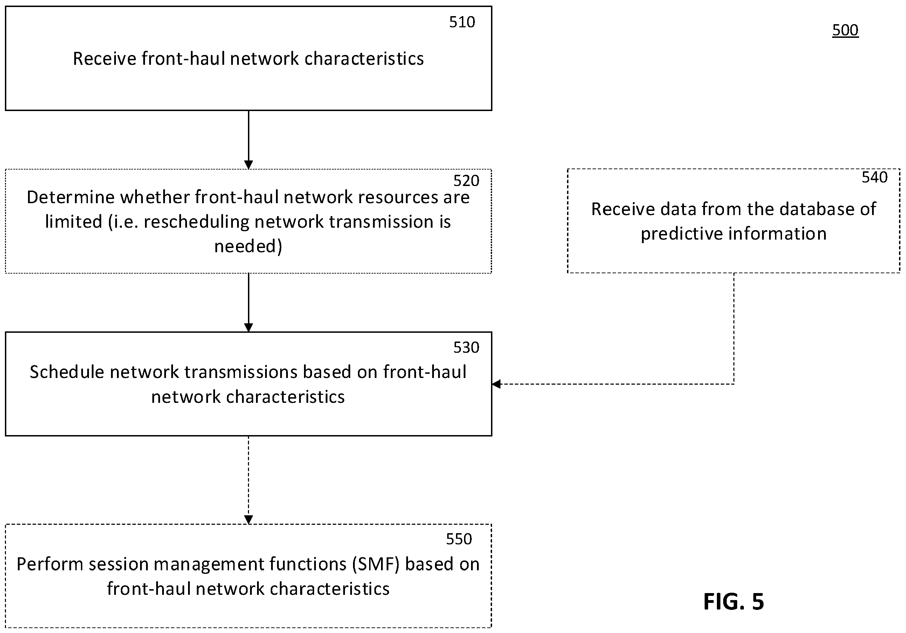

FIG. 5 illustrates a method 500 for managing front-haul network resources by scheduling network transmissions, according to embodiments of the present invention. For example, scheduling of the network transmission can include the scheduling of radio resources associated with the front-haul network. Initially, the scheduler 270 receives 510 one or more front-haul network characteristics from one or more of the front-haul network entities. In some embodiments, prior to any action taken by the scheduler 270, the front-haul network controller 260 monitors one or more of the front-network entities to collect information about one or more of the front-haul network characteristics such as, by way of non-limiting example, capacity of each front-haul network links, capacity of each front-haul network nodes, current status of front-haul network resources, current bit-rate of each front-haul network links and statistical multiplexing data. As previously discussed, the front-haul network controller may use the collected information to determine or evaluate one or more front-haul network characteristics. In other embodiments, there is no front-haul network controller that is designated to monitor the front-haul network and collect information for the front-haul network characteristics. In some embodiments, the scheduler 270 collects information about the front-haul network characteristics from each of the front-haul network entities and in some instances the scheduler can be configured to determine or evaluate one or more front-haul network characteristics based on the information collected. The information or front-haul network characteristics or both that the scheduler 270 receives may include an indication of the section or portion of the front-haul network with which the information or front-haul network characteristic is associated. For example, the current bit-rate of the front-haul network link received by the scheduler 270 includes specific geographical information of the front-haul network section where the current bit-rate was measured or determined.

According to embodiments, upon receipt of the one or more front-haul network characteristics, the scheduler proceeds to schedule 530 the network transmissions based at least in part on the one or more front-haul network characteristics. The network transmissions can include one or more of downlink and uplink transmissions which support one or more communications between one or more UEs and one or more network entities, for example a RRH. For example, the scheduling can include the scheduling of radio resources enabling the transmissions. As would be understood, in some instances the one or more front-haul network characteristics may not have an impact on the scheduling of the network transmissions being considered by the network scheduler.

According to some embodiments, when the scheduler receives the front-haul network characteristics, whether they are from the front-haul network controller or other front-haul network entities, the scheduler proceeds to determine whether re-scheduling of one or more network transmission is required. In some embodiments, the scheduler adjusts scheduling of network transmissions when one or more front-haul network characteristics indicate that network traffic at a specific location within the front-haul network are expected to fail to meet one or more network requirements. For example, when one or more of the front-haul characteristics indicate current bit-rate of the front-haul network at a specific section is slower than the pre-determined threshold value for the bit-rate in the front-haul network, the scheduler can determine re-scheduling parameters of network transmissions as necessary. It will be understood that the re-scheduling of the transmissions may be the re-scheduling of existing transmissions or the adjustment of a previously requested transmission that has not commenced. As another example, if the front-haul characteristics indicate the minimum amount of front-haul network resources (e.g. bandwidth, memory or number of processor cycles to allocate for network transmissions in the front-haul network) required is not available at a specific front-haul network segment, the scheduler can determine re-scheduling of the network transmission is necessary.

According to embodiments, when the scheduler determines that one or more of the front-haul network characteristics indicate the available front-haul network resources at a specific location are limited, the scheduler can proceed to re-schedule one or more network transmissions based on the front-haul network characteristics. In some embodiments, the scheduler may take into consideration one or more of the front-haul network characteristics every time network transmissions are scheduled. According to embodiments, when scheduler performs scheduling or re-scheduling of one or more of network transmissions, the current status of the front-haul network characteristics can be used as input. The one or more network transmissions to be scheduled or rescheduled may be the network transmissions which will be completed through front-haul network links without sufficient resources as identified by one or more front-haul characteristics.

In some embodiments, the scheduler 270 performs scheduling of network transmissions by restricting assignment of the network transmissions on a specific subset of resource blocks in one or more of time and frequency domains wherein the resource blocks comprise network spectrum for the transmission. For example, the scheduler 270 only assigns a small number of resource blocks within a specific time and frequency frame for a network transmission so that front-haul network traffic burst is being avoided, front-haul network delay is being kept low or for example minimized, and front-haul network operation is being maintained in a stable condition.

In some embodiments, the scheduler 270 uses information received 540 by a database of predictive information 391 for the purpose of scheduling or rescheduling of network transmissions. For example, the predictive information may be a list of UEs for which a massive network transmission (e.g. uplink or downlink transmission) can be anticipated based on historical use by this particular UE, when the UE is admitted to the network. In this instance, the scheduler 270 may restrict allocation of a specific subset of resource blocks to network transmissions originated by UEs on the list provided by the database of predictive information 391. Upon the restriction, data packets associated with these UEs may not be transmitted through the subset of resource blocks until the scheduler 270 removes the restriction.

In some embodiments, in addition to the consideration of front-haul network characteristics, the scheduler 270 may need to meet additional transmission requirements. For example, assignment of front-haul network resources may need to be in specific format. In some embodiments scheduling may have to take into consideration capabilities of UE. In such case, assignment of a certain network transmission may be further restricted in addition to the restriction imposed by the scheduler 270 based on one or more of the front-haul network characteristics.

In some embodiments, the scheduler 270 also performs 550 one or more of session management functions which may include establishing network session, releasing network session, modifying network session, registering network session data and acquiring current network session data. The scheduler performs the session management functions at least in part based on the one or more front-haul network characteristics. For example, when the scheduler 270 receives current status of the one or more of the front-haul network characteristics indicating that the front-haul network resource is limited at the given moment, the scheduler 270 may modify one or more network sessions which is maintained through the limited front-haul network resources. In such cases, the scheduler 270 may determine that modification of one or more network sessions established by UEs that are ranked lower in terms of priority may be required.

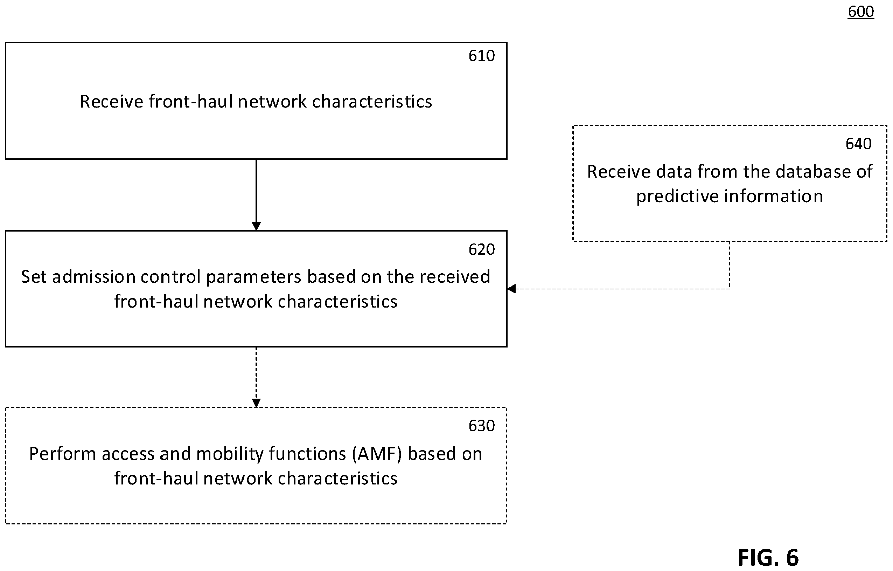

FIG. 6 illustrates a method 600 for managing front-haul network resources by manipulating the admission control parameters according to embodiments of the present invention. The admission control parameters are factors to be taken into considerations by admission control mechanisms which determine whether to accept a network connection request from an originating UE.

In accordance with embodiments, the admission controller 280 receives 610 one or more front-haul network characteristics from one or more of the front-haul network entities. In some embodiments, prior to any action taken by the admission controller 280, the front-haul network controller 260 monitors one or more of the front-network entities to collect information about one or more of the front-haul network characteristics such as, by way of non-limiting example, capacity of each front-haul network links, capacity of each front-haul network nodes, current status of front-haul network resources, current bit-rate of each front-haul network links and statistical multiplexing data. As previously discussed, the front-haul network controller may use the collected information to determine or evaluate one or more front-haul network characteristics. In other embodiments, there is no front-haul network controller that is designated to monitor the front-haul network and collect information for the front-haul network characteristics. In some embodiments, the admission controller 280 collects information about the front-haul network characteristics from each of the front-haul network entities and in some instances the admission controller 280 can be configured to determine or evaluate one or more front-haul network characteristics based on the information collected. The information or front-haul network characteristics or both that the admission controller 280 receives may include an indication of the section or portion of the front-haul network with which the information or front-haul network characteristic is associated. For example, the current bit-rate of the front-haul network link received by the admission controller 280 includes specific geographical information of the front-haul network section where the current bit-rate was measured or determined.

In some embodiments, the admission controller 280 receives the front-haul characteristics from the front-haul network controller 260 in a similar way in which the scheduler 270 receives the front-haul characteristics from the front-haul network controller. In other embodiments, the admission controller 280 receives the front-haul network characteristics directly from one or more of network entities in a similar way in which the scheduler 270 receives from network entities.

According to embodiments, once the admission controller 280 receives the front-haul network characteristics, whether they are from the front-haul network controller or other front-haul network entities, the admission controller 280 proceeds to set or determine 620 one or more admission control parameters at least in part based on the one or more front-haul network characteristics. In some embodiments, the admission control parameters may include the threshold values for one or more of the total utilized bandwidth of network, the total number of utilized UEs and the current bit-rate of network transmission at a specific network node (e.g. RRH at a specific location). In some embodiments, the threshold values are established for an admission control mechanism to regulate UE admissions. For example, if statistics representing current network status (e.g. the total utilized bandwidth of network, the total number of active UEs, the current bit-rate of network transmission) reach or exceed a pre-determined threshold value, new network transmission requests from UEs may be rejected. As such, the admission controller will send an indication, for example to the BBU or RRH depending on the functionality separation between the BBU and RRH, that the network transmission request will not be accepted.

In some embodiments, the admission controller 280 can use the one or more front-haul network characteristics to determine admission parameters relating to a new radio bearer or traffic bearer that is associated with a UE that is currently communicatively connected with the network.

According to embodiments of the present invention, when the admission controller 280 proceeds to set one or more admission control parameters, it sets the parameters based at least partly on one or more of the front-haul network characteristics. In some cases, the one or more of the front-haul network characteristics indicate the available front-haul network resources are limited when, for example, bandwidth, memory or number of processor cycles to allocate for network transmissions is not sufficient at a specific front-haul network location (e.g. a specific front-haul network segment). In some embodiments, when the admission controller 280 sets one or more admission control parameters, it may take into consideration whether the front-haul network link with limited resources is associated with the network transmissions initiated by the UEs.

According to some embodiments, when one or more of the front-haul network characteristics indicates the available front-haul network resources at a specific location are limited, the admission controller 280 updates one or more of the admission control parameters. As noted above, the admission control parameters may be the threshold values for one or more of the total utilized bandwidth of network, the total number of allowable UEs and the current bit-rate of network transmission at a specific network node (e.g. RRH at a specific location).

For example, when one or more of the front-haul network characteristics indicates the front-haul network traffic is saturated, the admission controller 280 may decrease the maximum number of UEs permitted to access the network, thereby attempting to maintain stability of the communication network. In another example, when the front-haul network characteristics indicates the front-haul network traffic is saturated at a specific location, the admission controller 280 may decrease the maximum number of UEs entering the network only if the network transmission must be established through the congested front-haul network path.

According to embodiments, when the number of currently activated UEs reaches at or exceeds a threshold value, the admission controller 280 may regulate the network traffic volume until the number of active UEs falls under the threshold, e.g. the transmission volume from the active UEs falls below the threshold. In some embodiments, the admission controller 280 may directly regulate the network traffic by prohibiting a new UE establishing a network connection. In some other embodiments, the admission controller 280 instructs a separate network entity to manage network traffic volume at a specific network segment. Upon receiving instructions from the admission controller 280, the separate network entity may prohibit a new network session from being established at RRHs 120 which are impacted by the saturation of the particular portion of the front-haul network. In some embodiments, the separate network entity that prohibits a new network session being established may exist in the core network.

In some embodiments, the admission controller 280 updates admission control parameters based upon the recommendation on per slice traffic volume in the front-haul network provided by the front-haul network controller 260.

In some embodiments, the admission controller 280 receives 640 one or more inputs from a database of predictive information 391 and determines or sets 620 the admission control parameters at least in part based thereon. For example, the predictive information may be a list of UEs for which a massive network transmission (e.g. uplink or downlink transmission) can be anticipated based on historical use by this particular UE, when the UE is admitted to the network. In some embodiments, the admission controller 280 may adjust the threshold value for the number of connected UEs in a certain area where, based on the database of predictive information 391. This may also provide a means for distribution of admission of UEs for which large transmission volumes are expected over different portions of the front-haul network. In some embodiments, the admission controller 280 may prohibit connection of particular high traffic volume UEs when the front-haul network traffic is at a level wherein inclusion of the high traffic volume UE may saturate the front-haul network.

In some embodiments, the admission control parameters manipulate, at least in part based on one or more of the front-haul network characteristics, operation of one or more of User Equipment (UE) registration management, connection management, reachability management, mobility management, network security, network access management and network authorization. In such embodiments, these functions are associated with the communications between UEs and terminal network access points (e.g. RRHs) and operated on a basis of each UE in order to individually set admission control parameters for each UE. For example, when one or more of the front-haul network characteristics indicate traffic of the front-haul network in a specific location is congested, the admission controller 280 may adjust one or more of the admission control parameters. Then, identification and distribution rules for different user data traffic type (e.g. a network path for a UE) is configured based upon the updated admission control parameters that reflect the front-haul network link conditions at various locations. Consequently, network transmission between the UE and core network can be provided with a suitable network path that is available regardless of the congestion in one or more front-haul network links.

It should further be understood that different embodiments have been discussed in the context of individual features or elements. This has been for the sake of simplifying the discussion. Features and elements introduced in one embodiment may be combined with the features and elements introduced in other embodiments. For example, one or more front-haul network characteristics can be simultaneously provided to both a scheduler and admission controller thereby enabling the parallel provision of scheduling of transmission and admission of UEs, which can provide for the mitigation of subsequent modification of one of scheduling or admission if they were performed serially.

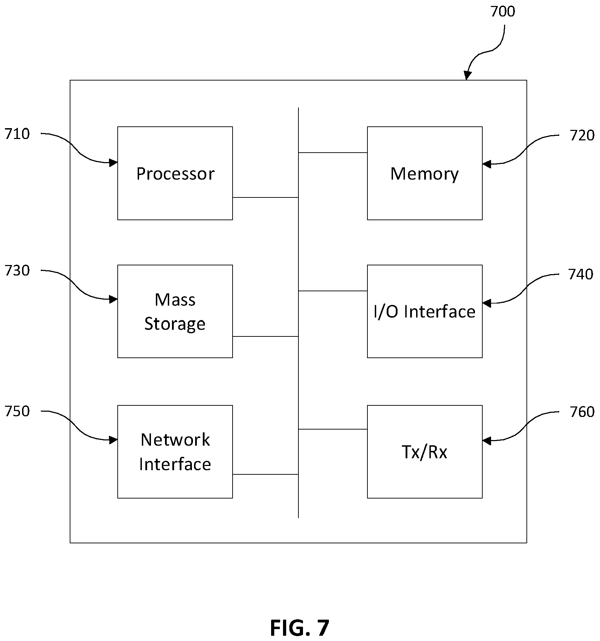

FIG. 7 is a schematic diagram of an electronic device that may for example, comprise nodes or functional entities of the communications system, or perform any or all of steps of the above methods and features described herein, according to different embodiments of the present invention

In some embodiments, the electronic device may be an element of communications network infrastructure, such as a base station (for example a NodeB, an evolved Node B (eNodeB, or eNB), a next generation NodeB (sometimes referred to as a gNodeB or gNB), a home subscriber server (HSS), a gateway (GW) such as a packet gateway (PGW) or a serving gateway (SGW) or various other nodes or functions within a core network (CN) or a Public Land Mobility Network (PLMN). In other embodiments, the electronic device may be a device that connects to the network infrastructure over a radio interface, such as a mobile phone, smart phone or other such device that may be classified as a User Equipment (UE). In some embodiments, the electronic device may be a Machine Type Communications (MTC) device (also referred to as a machine-to-machine (m2m) device), or another such device that may be categorized as a UE despite not providing a direct service to a user. In some references, an electronic device may also be referred to as a mobile device, a term intended to reflect devices that connect to mobile network, regardless of whether the device itself is designed for, or capable of, mobility. Specific devices may utilize all of the components shown or only a subset of the components, and levels of integration may vary from device to device. Furthermore, a device may contain multiple instances of a component, such as multiple processors, memories, transmitters, receivers, etc.

As shown, the electronic device 700 includes a processor 710, memory 720, non-transitory mass storage 730, I/O interface 740, network interface 750, and a transceiver, all of which are communicatively coupled via bi-directional bus. According to certain embodiments, any or all of the depicted elements may be utilized, or only a subset of the elements. Further, device may contain multiple instances of certain elements, such as multiple processors, memories, or transceivers. Also, elements of the hardware device may be directly coupled to other elements without the bi-directional bus.

The memory may include any type of non-transitory memory such as static random access memory (SRAM), dynamic random access memory (DRAM), synchronous DRAM (SDRAM), read-only memory (ROM), any combination of such, or the like. The mass storage element may include any type of non-transitory storage device, such as a solid state drive, hard disk drive, a magnetic disk drive, an optical disk drive, USB drive, or any computer program product configured to store data and machine executable program code. According to certain embodiments, the memory or mass storage may have recorded thereon statements and instructions executable by the processor for performing any of the aforementioned method steps described above.

The electronic device 700 may also include one or more network interfaces 750, which may include at least one of a wired network interface and a wireless network interface. Network interface 750 may include a wired network interface to connect to a network, and also may include a radio access network interface for connecting to other devices over a radio link. When the electronic device is a network infrastructure element, the radio access network interface may be omitted for nodes or functions acting as elements of the PLMN other than those at the radio edge (e.g. an eNB). When the electronic device is infrastructure at the radio edge of a network, both wired and wireless network interfaces may be included. When the electronic device is a wirelessly connected device, such as a User Equipment, radio access network interface may be present and it may be supplemented by other wireless interfaces such as Wi-Fi network interfaces. The network interfaces 750 allow the electronic device to communicate with remote entities such as those connected to network.

Optional video adapter and I/O interface 740 provide interfaces to couple the electronic device to external input and output devices. Examples of input and output devices include a display coupled to the video adapter and an I/O device such as a touch-screen coupled to the I/O interface 740. Other devices may be coupled to the electronic device, and additional or fewer interfaces may be utilized. For example, a serial interface such as Universal Serial Bus (USB) (not shown) may be used to provide an interface for an external device. Those skilled in the art will appreciate that in embodiments in which the electronic device is part of a data center, I/O interface 740 and video adapter may be virtualized and provided through network interface 750.

In some embodiments, the electronic device may be a standalone device, while in other embodiments the electronic device may be resident within a data center. A data center, as will be understood in the art, is a collection of computing resources (typically in the form of servers) that can be used as a collective computing and storage resource. Within a data center, a plurality of servers can be connected together to provide a computing resource pool upon which virtualized entities can be instantiated. Data centers can be interconnected with each other to form networks consisting of pools computing and storage resources connected to each by connectivity resources. The connectivity resources may take the form of physical connections such as Ethernet or optical communications links, and in some instances may include wireless communication channels as well. If two different data centers are connected by a plurality of different communication channels, the links can be combined together using any of a number of techniques including the formation of link aggregation groups (LAGs). It should be understood that any or all of the computing, storage and connectivity resources (along with other resources within the network) can be divided between different sub-networks, in some cases in the form of a resource slice. If the resources across a number of connected data centers or other collection of nodes are sliced, different network slices can be created.

Through the descriptions of the preceding embodiments, the present invention may be implemented by using hardware only or by using software and a necessary universal hardware platform. Based on such understandings, the technical solution of the present invention may be embodied in the form of a software product. The software product may be stored in a non-volatile or non-transitory storage medium, which can be a compact disk read-only memory (CD-ROM), USB flash disk, or a removable hard disk. The software product includes a number of instructions that enable a computer device (personal computer, server, or network device) to execute the methods provided in the embodiments of the present invention. For example, such an execution may correspond to a simulation of the logical operations as described herein. The software product may additionally or alternatively include number of instructions that enable a computer device to execute operations for configuring or programming a digital logic apparatus in accordance with embodiments of the present invention.

## Claims

1. A method for managing network resources in a cloud-RAN, C-RAN, architecture, the method comprising:
receiving, by a scheduler (270), one or more front-haul network characteristics from a front-haul network controller (260), wherein the one or more front-haul network characteristics are determined by the front-haul network controller (260) based on information received, by the front-haul network controller (260), from one or more of a BBU (110), an RRH (120), a front-haul network link (230) and a front-haul network node (240),
wherein the front-haul network of the C-RAN couples one or more Baseband Units, BBU (110), to one or more Remote Radio Heads, RRH (120), through one or more of intermediary network nodes (240) and point-to-point front-haul links (230),
wherein the front-haul network characteristics include one or more of front-haul network capacity, current front-haul network resource availability, current bit-rate of a front-haul network link; and
scheduling, by the scheduler (270), one or more network transmissions,
wherein the scheduler (270) uses information received by a database of predictive information (391) for the purpose of scheduling or rescheduling of network transmissions,
wherein the predictive information is a list of user equipment(s), UEs, for which a massive network transmission can be anticipated based on historical use by this particular UE,
wherein the scheduling is determined at least in part based on the one or more front-haul network characteristics,
wherein scheduling includes restricting or limiting the network transmissions when available front-haul network resources are limited,
wherein restricting or limiting includes selectively allocating the network transmissions to a specific subset of resource blocks in one or more of time and frequency domains, namely to the specific subset of resource blocks originated by UEs on the list provided by the database of predictive information (391),
wherein the scheduler (270) is configured to only assign a small number of resource blocks, namely a specific subset of resource blocks that comprise network spectrum for the transmission, within a specific time and frequency frame for a network transmission so that front-haul network traffic burst can be avoided.

2. The method according to claim 1, wherein the front-haul network characteristics further include statistical multiplexing data.

3. The method according to claim 1, further comprising performing one or more of session management functions at least in part based on the one or more front-haul network characteristics.

4. The method according to claim 3, the session management functions include one or more of establishing a network session, releasing a network session, modifying a network session, registering a network session data and acquiring current network session data.

5. A scheduler (270), comprising:
a processor (710); and
machine readable memory (720) storing machine executable instructions which when executed by the processor (710) configure the scheduler (270) to execute the method of claim 1.

6. The scheduler (270) according to claim 5, wherein the front-haul network characteristics further include statistical multiplexing data

## Patentansprüche

1. Verfahren zum Verwalten von Netzwerkressourcen in einer Cloud-RAN-Architektur, C-RAN, wobei das Verfahren Folgendes umfasst:
Empfangen eines oder mehrerer Front-Haul-Netzwerkmerkmale von einer Front-Haul-Netzwerksteuerung (260) durch einen Planer (270), wobei das eine oder die mehreren Front-Haul-Netzwerkmerkmale durch die Front-Haul-Netzwerksteuerung (260) basierend auf Informationen bestimmt werden, die durch die Front-Haul-Netzwerksteuerung (260) von einer oder mehreren von einer BBU (110), einem RRH (120), einer Front-Haul-Netzwerkverbindung (230) und einem Front-Haul-Netzwerkknoten (240) empfangen werden,
wobei das Front-Haul-Netzwerk der C-RAN eine oder mehrere Basisbandeinheiten, BBU (Baseband Units) (110), mit einem oder mehreren Remote-Radio-Heads, RRH (Remote Radio Heads) (120), über einen oder mehrere Zwischen-Netzwerkknoten (240) und Punkt-zu-Punkt-Front-Haul-Verbindungen (230) koppelt,
wobei die Front-Haul-Netzwerkmerkmale eines oder mehrere von Kapazität des Front-Haul-Netzwerks, aktuelle Ressourcenverfügbarkeit des Front-Haul-Netzwerks, aktuelle Bitrate einer Front-Haul-Netzwerkverbindung beinhalten; und
Planen einer oder mehrerer Netzwerkübertragungen durch den Planer (270),
wobei der Planer (270) von einer Datenbank mit Vorhersageinformationen (391) empfangene Informationen zum Zweck des Planens oder Neuplanens von Netzwerkübertragungen verwendet, wobei es sich bei den Vorhersageinformationen um eine Liste von Benutzergerät(en), UE (user equipment), handelt, für die eine massive Netzwerkübertragung basierend auf der historischen Verwendung durch diese bestimmte UE vorweggenommen werden kann,
wobei das Planen mindestens teilweise basierend auf der einen oder mehreren Front-Haul-Netzwerkmerkmale bestimmt wird,
wobei das Planen Einschränken oder Begrenzen der Netzwerkübertragungen beinhaltet, wenn die verfügbaren Front-Haul-Netzwerkressourcen begrenzt sind,
wobei das Einschränken oder Begrenzen selektives Zuordnen der Netzwerkübertragungen zu einer spezifischen Teilmenge von Ressourcenblöcken in einem oder mehreren Zeit- und Frequenzdomänen beinhaltet, nämlich zu der spezifischen Teilmenge von Ressourcenblöcken, die von UE auf der von der Datenbank mit Vorhersageinformationen (391) bereitgestellten Liste stammen,
wobei der Planer (270) dazu konfiguriert ist, nur eine kleine Anzahl von Ressourcenblöcken, nämlich eine spezifische Teilmenge von Ressourcenblöcken, die das Netzwerkspektrum für die Übertragung umfassen, innerhalb eines spezifischen Zeit- und Frequenzrahmens für eine Netzwerkübertragung zuzuweisen, sodass ein Front-Haul-Netzwerkverkehrsburst vermieden werden kann.

2. Verfahren gemäß Anspruch 1,
wobei die Front-Haul-Netzwerkmerkmale ferner statistische Multiplexing-Daten beinhalten.

3. Verfahren gemäß Anspruch 1, ferner umfassend Ausführen einer oder mehrerer Sitzungsverwaltungsfunktionen mindestens teilweise basierend auf dem einen oder den mehreren Front-Haul-Netzwerkmerkmalen.

4. Verfahren gemäß Anspruch 3, wobei die Sitzungsverwaltungsfunktionen eines oder mehrere von Einrichten einer Netzwerksitzung, Freigeben einer Netzwerksitzung, Ändern einer Netzwerksitzung, Registrieren von Netzwerksitzungsdaten und Erfassen aktueller Netzwerksitzungsdaten beinhalten.

5. Planer (270), umfassend:
einen Prozessor (710); und
einen maschinenlesbaren Speicher (720), der maschinenausführbare Anweisungen speichert, die, wenn sie von dem Prozessor (710) ausgeführt werden, den Planer (270) dazu konfigurieren, das Verfahren gemäß Anspruch 1 auszuführen.

6. Planer (270) gemäß Anspruch 5,
wobei die Front-Haul-Netzwerkmerkmale ferner statistische Multiplexing-Daten beinhalten.

## Revendications

1. Procédé de gestion de ressources réseau dans une architecture cloud-RAN, C-RAN, le procédé comprenant :
la réception, par un planificateur (270), d'une ou de plusieurs caractéristiques de réseau de liaison frontale provenant d'un dispositif de commande de réseau de liaison frontale (260), dans lequel les une ou plusieurs caractéristiques de réseau de liaison frontale sont déterminées par le dispositif de commande de réseau de liaison frontale (260) sur la base des informations reçues, par le dispositif de commande de réseau de liaison frontale (260), d'un ou de plusieurs éléments parmi une BBU (110), une RRH (120), une liaison de réseau de liaison frontale (230) et un noeud de réseau de liaison frontale (240),
dans lequel le réseau de liaison frontale du C-RAN couple une ou plusieurs unités de bande de base, BBU (110), à une ou plusieurs têtes radio distantes, RRH (120), via un ou plusieurs noeuds de réseau intermédiaires (240) et liaisons frontales point à point (230),
dans lequel les caractéristiques du réseau de liaison frontale comportent un ou plusieurs éléments parmi la capacité du réseau de liaison frontale, la disponibilité actuelle des ressources du réseau de liaison frontale et le débit binaire actuel d'une liaison de réseau de liaison frontale ; et
la planification, par le planificateur (270), d'une ou de plusieurs transmissions réseau,
dans lequel le planificateur (270) utilise les informations reçues par une base de données d'informations prédictives (391) dans le but de planifier ou de reprogrammer des transmissions réseau,
dans lequel les informations prédictives sont une liste d'un ou de plusieurs équipements utilisateur, UE, pour lesquels une transmission réseau massive peut être anticipée sur la base d'une utilisation historique par cet UE particulier,
dans lequel la planification est déterminée au moins en partie sur la base des une ou plusieurs caractéristiques du réseau de liaison frontale,
dans lequel la planification comporte la restriction ou la limitation des transmissions réseau lorsque les ressources disponibles du réseau de liaison frontale sont limitées,
dans lequel la restriction ou la limitation comportent l'attribution sélective des transmissions réseau à un sous-ensemble spécifique de blocs de ressources dans un ou plusieurs domaines parmi les domaines temporels et fréquentiels, à savoir au sous-ensemble spécifique de blocs de ressources générés par les UE sur la liste fournie par la base de données d'informations prédictives (391),
dans lequel le planificateur (270) est configuré pour attribuer uniquement un petit nombre de blocs de ressources, à savoir un sous-ensemble spécifique de blocs de ressources qui comprennent un spectre de réseau pour la transmission, dans une trame de temps et de fréquence spécifique pour une transmission réseau de sorte qu'une transmission en rafale sur le trafic du réseau de liaison frontale peut être évitée.

2. Procédé selon la revendication 1,
dans lequel les caractéristiques du réseau de liaison frontale comportent en outre des données de multiplexage statistique.

3. Procédé selon la revendication 1, comprenant en outre l'exécution d'une ou de plusieurs fonctions de gestion de session au moins en partie sur la base des une ou plusieurs caractéristiques du réseau de liaison frontale.

4. Procédé selon la revendication 3, les fonctions de gestion de session comportent une ou plusieurs opérations parmi l'établissement d'une session réseau, la libération d'une session réseau, la modification d'une session réseau, l'enregistrement de données d'une session réseau et l'acquisition de données actuelles d'une session réseau.

5. Planificateur (270), comprenant :
un processeur (710) ; et
une mémoire lisible par machine (720) stockant des instructions exécutables par machine qui, lorsqu'elles sont exécutées par le processeur (710) configurent le planificateur (270) pour exécuter le procédé selon la revendication 1.

6. Planificateur (270) selon la revendication 5,
dans lequel les caractéristiques du réseau de liaison frontale comportent en outre des données de multiplexage statistique.
